Europäisches Patentamt

European Patent Office

Office européen des brevets

(11) Publication number: **0 082 635**
**B1**

# EUROPEAN PATENT SPECIFICATION

(45) Date of publication of patent specification: **15.07.87**

(51) Int. Cl.⁴: **B 01 J 13/02, B 41 M 5/00**

(21) Application number: **82306552.9**

(22) Date of filing: **08.12.82**

(54) Process for continuously manufacturing microcapsules.

(30) Priority: **21.12.81 US 332385**

(43) Date of publication of application:
**29.06.83 Bulletin 83/26**

(45) Publication of the grant of the patent:
**15.07.87 Bulletin 87/29**

(84) Designated Contracting States:
**AT BE CH DE FR GB IT LI LU NL SE**

(56) References cited:
**GB-A-2 073 132**
**US-A-3 464 926**
**US-A-3 812 056**
**US-A-3 816 331**
**US-A-4 100 103**
**US-A-4 105 823**

(73) Proprietor: **APPLETON PAPERS INC.**
**P.O. Box 359 825 East Wisconsin Avenue**
**Appleton Wisconsin 54912 (US)**

(72) Inventor: **Brown, Robert W.**
**91 Estherbrook Court**
**Appleton Wisconsin, WI 54911 (US)**
Inventor: **Balster, Lester A.**
**2715 South Greenview**
**Appleton Wisconsin WI 54911 (US)**

(74) Representative: **Norris, Richard John et al**
**The Wiggins Teape Group Limited Group**
**Patents Departement Butler's Court**
**Beaconsfield Buckinghamshire HP9 1RT (GB)**

Courier Press, Leamington Spa, England.

# 0 082 635

**Description**

This invention relates to a process for continuously manufacturing microcapsules, particularly, but not exclusively, for use in pressure-sensitive copying systems.

In the most widely used type of pressure-sensitive copying system, an upper sheet is coated on its lower surface with microcapsules containing a solution of colourless colour former (this upper sheet is known as a coated back or CB sheet), and a lower sheet is coated on its upper surface with a colour developing material such as an acidic clay or a phenolic resin (this lower sheet is known as a coated front or CF sheet). A number of intermediate sheets are usually also provided, each of which is coated on its lower surface with microcapsules and on its upper surface with colour developing material (these intermediate sheets are known as coated front and back or CFB sheets). When localised pressure is applied to the set of sheets for example by writing or typing, the microcapsules are ruptured and the colour former solution is released onto the colour developing material on the adjacent lower sheet and a chemical reaction ensues in which the colour of the colour former is developed.

Numerous microencapsulation processes are known in the art. Most of these are batch processes. In principle continuous processes offer advantages over batch processes and several continuous processes have been proposed, see for example US Patent 3812056 and 3816331. US Patent No. 3812056 discloses a process in which liquid-liquid phase separation is performed in a tubular capsule manufacturing conduit having a single entry port and a single exit port. The process proposed in US Patent No. 3816331 is similar to that of US 3812056 except that the manufacturing conduit has a plurality of entry ports and a single exit port. These processes are limited by the fact that the capsule manufacturing vehicle must be passed through the conduit under turbulent flow conditions in order to prevent agglomeration of embryonic capsules as they are formed. Also a temperature gradient must be maintained along the conduit in order to enwrap the intended capsule nucleus material with wall material. Methylated methylol melamine is disclosed as a capsule wall material precursor for use in this process.

One of the main problems with these prior art continuous encapsulation processes is the requirement to maintain the material components of the encapsulating system uniformly turbulent all along the encapsulating conduit in order to prevent agglomeration of the capsules produced. Also these continuous encapsulation processes require the establishment and maintenance of temperature gradients along the conduit in order to cause the capsule wall material to form a separate phase, to render the separated phase more viscous, to enwrap dispersed intended capsule core materials with the separated phase and to solidify or gel the wall material to yield capsules having self-supporting walls.

Another previous proposal is to be found in Japanese Patent Disclosure No. 55—124534. This relates to a method for continuously manufacturing microcapsules in a multi-stage cascade of reaction vessels utilizing an interfacial polymerization process for capsule wall formation.

Yet a further proposal is to be found in US Patent No. 4105823. This discloses a method of encapsulating to produce microcapsules in which the capsule wall material is produced by the acid catalysis of a water soluble urea-formaldehyde precondensate and a water soluble melamine-formaldehyde precondensate in the presence of a water-soluble polymer, which is capable of being crosslinked by said precondensates. Example 8 of this patent relates to the use of this process to produce capsules by a continuous process wherein the capsule manufacturing vehicle flows through a series of hoppers by means of gravity through overflow pipes. The throughput of this process is such that the material takes two hours to pass through the system.

The processes of Japanese Patent Disclosure No. 55—124534 and US Patent No. 4105823 are in reality just a series of batch processes where the product at each stage of the respective process merely flows by gravity to the next stage of the process. These processes tend to allow the first-in (old) droplets of intended core material to have a greater chance to obtain thicker walls at the expense of the later-in (newer) droplets. Such inhomogeneity of reaction conditions results in capsules of non-uniform quality; that is, some capsules have thick walls and some capsules have thin walls.

One of the better batch encapsulation processes, which has been successfully commercialized, is disclosed in US Patent No. 4100103. In the method, encapsulation is brought about by an in situ reaction in an aqueous vehicle of melamine and formaldehyde and/or polycondensation of monomeric methylol melamine or etherified methylol melamine (EMM), or low molecular weight polymers thereof in the presence of particles of intended capsule nucleus material and a system modifier in the form of a negatively-charged carboxyl-substituted linear aliphatic hydrocarbon polyelectrolyte material dissolved in the aqueous vehicle.

However, when EMM is used in this type of batch encapsulation process polymerization begins at the time the EMM and the negatively-charged polyelectrolyte material come into contact. In production size equipment for this process, in which emulsification can take 35—45 minutes and the batch temperature may be about 45°C, inclusion of the EMM in the batch with the other system components prior to emulsification of the intended liquid capsule nucleus material results in the formation and deposition of capsule wall material prior to obtaining the proper drop size reduction of the intended liquid capsule nucleus material. This premature wall formation results in poor utilization of the wall materials and also produces some microcapsules outside the acceptable size range.

When this production size batch process is altered to introduce the EMM after completion of

2

## 0 082 635

emulsification there is produced a partial destabilization of the emulsion resulting in a growth of the drop size of the intended liquid nucleus material. Techniques utilized to minimise this emulsion drop size growth include the introduction of the EMM in a mixture with some of the negatively-charged polyelectrolyte material and maintenance of the entire batch at lower temperatures.

Another problem with batch processes such as that disclosed in US Patent No. 4100103 is that the tank in which the encapsulation is performed must be heated in order to perform the process in a reasonable amount of time. This heating is accomplished either by means of a heating jacket on the tank or an immersion heater in the tank. As a result of the production of a series of several batches in these tanks, there is an accumulation of solid material at the surface where the heated member comes into contact with the capsule manufacturing vehicle. Periodically, this accumulation must be removed in a maintenance clean-up operation. This required clean-up not only adds to the cost of capsule production, but, because of the time required, results in lower capsule output.

It has now been found that the encapsulation technology generally disclosed in US Patent No. 4100103 in the context of a batch process lends itself to utilization in a continuous process and that this continuous process avoids many if not all of the drawbacks associated with both the batch process just described and the prior art continuous processes. Thus the present invention is based on the discovery that a continuous encapsulation process may be carried out in a conduit in which a temperature gradient and a turbulent flow are not required to produce high quality mononuclear microcapsules of a narrow size distribution if the capsule wall material is produced by an in situ polymerization of methylol melamine or etherified methylol melamine in the presence of certain negatively charged carboxyl substituted linear aliphatic hydrocarbon polyelectrolyte materials.

According to the present invention there is provided a process for manufacturing microcapsules which comprises emulsifying particles or droplets of a substantially water insoluble capsule nucleus material in an aqueous manufacturing vehicle containing:

(a) a mixture of a water soluble capsule wall precursor material selected from monomeric methylol melamine or etherified methylol melamine or low molecular weight polymers thereof, or any combination of these materials; and

(b) a negatively charged polymeric polyelectrolyte having a linear aliphatic hydrocarbon backbone with an average of two carboxyl groups for every four to six backbone carbons.

characterized in that the process is carried out continuously by mixing the capsule wall precursor material, the particles or droplets of capsule nucleus material and the polyelectrolyte prior to emulsification and passing the emulsion in non-turbulent flow through a tubular reactor at a single elevated temperature.

The droplet size of the substantially water insoluble capsule nucleus material is determined, in part, by the rate of flow of the previously mixed encapsulation components through the emulsification apparatus which is a result of the rate at which they are pumped into the conduit leading to the emulsification apparatus. Flow meters may be incorporated in the apparatus to measure the flow rate of the encapsulation components. The emulsification apparatus may be an in-line emulsification mill.

The emulsion flows from the emulsification apparatus into the tubular reactor. In the preferred embodiment the tubular reactor is maintained at a single elevated temperature of preferably 40—95°C, more preferably 60—95°C. To enable the physical conditions within the tubular reactor to be monitored it is preferred to introduce temperature and pressure monitors into the tubular reactor.

Of the possible capsule wall precursor materials etherified methylol melamine is preferred.

The negatively charged polymeric polyelectrolyte is preferably poly(ethylene-co-maleic anhydride), poly(methylvinylether-co-maleic anhydride), poly(acrylic acid), poly(propylene-co-maleic anhydride), poly(butadiene-co-maleic anhydride) or poly(vinyl acetate-co-maleic anhydride).

It will be appreciated that by employing the process of the present invention many of the disadvantages experienced with prior art encapsulation processes will be overcome.

In the process of the present invention the turbulent flow required by prior art continuous encapsulation processes is not required, desirable or even practical in many cases. Similarly there is no longer a need to maintain a difficult temperature gradient because by utilizing the present process a single elevated temperature may be maintained in the reactor, which is simpler and more convenient than having to provide a temperature gradient.

It will also be appreciated that with the continuous process of the present invention each increment of addition supplies fresh intended nucleus material droplets and fresh reactants, providing all oil droplets equal opportunity to receive wall material with concomitant high uniformity of capsule product.

The continuous process of the present invention overcomes the disadvantages of the prior art batch processes. In the present invention all components are mixed prior to initiation of emulsification of the nucleus material without adverse effects on microcapsule size because the total lapsed time between addition of the EMM and completion of the emulsification is only a matter of seconds (13.5 seconds in the preferred embodiment). The thorough mixing of the components in the continuous emulsification mill and the higher temperature of the exiting emulsion results in rapid polymerization of the EMM and subsequent deposition of this wall material to form microcapsules without emulsion destabilization. The microcapsules

3

produced by the process of the present invention have a narrow and small drop size distribution and, faced with the experience of the prior art, are certainly unexpected.

A further advantage of the present process is that there is no accumulation of solid material in the reaction vessel, hence the costly and time consuming requirement of removing this accumulation by regular maintenance is eliminated.

It will be appreciated that the wall formation chemistry of the present process is substantially similar to that of US Patent No. 4100103 and its UK counterpart No. 1542058. These patents should be consulted for additional information as to raw materials which may be used in the present process, including for example capsule nucleus materials.

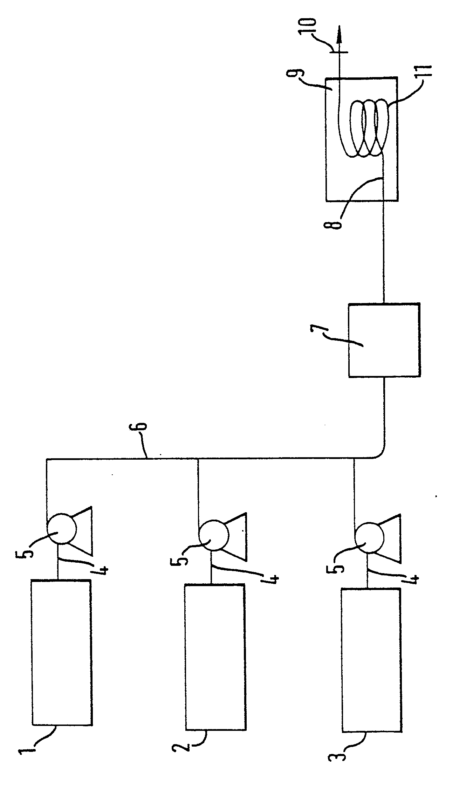

In order that the process of the present invention be more readily understood reference will now be made to the drawing which illustrates diagrammatically and by way of example an embodiment thereof and which shows a schematic flow diagram representation of the process.

Referring now to the drawing, supply tanks 1, 2 and 3 for holding the various components used in the process are provided with respective conduits 4 which feed into a common tubular conduit 6. Respective pumps 5 are provided in each of the conduits 4. The tubular conduit 6 leads to a continuous emulsion mill 7 which discharges into a tubular reactor in the form of an encapsulating conduit 8. The conduit 8 passes through a reactor 9 to an outlet port 10. A portion of the conduit 8 within the reactor 9 is in the form of a coil 11 so as to prolong the time for which the material within the conduit 8 is within the reactor 9. The reactor 9 is essentially a water jacket for the coil 11. In use, components from the tanks 1, 2 and 3 are passed continuously through the conduits 4 into the conduit 6 by means of the pumps 5. The resulting mixture passes to the continuous emulsification mill 7 where intimate mixing and emulsification occurs to produce an emulsion of intended capsule nucleus material in a vehicle comprising the other components of the encapsulation system. This emulsion then passes from the emulsification mill 7 into the conduit 8 of the tubular reactor 9 where it is maintained at a single elevated temperature by means of the hot water in the reactor 9. Mononuclear capsules of narrow drop size distribution dispersed in the manufacturing vehicle are expelled at the outlet port 10 of the encapsulating conduit 8.

The invention will now be illustrated by the following example which utilises a process as just described with reference to the drawing, and in which all parts and percentages are by weight unless otherwise specified.

The tank 1 contained an aqueous solution of a mixture of poly(ethylene-co-maleic anhydride) materials as listed in Table 1. After this solution had been prepared it was adjusted to pH 4 with 20% sodium hydroxide and maintained at a temperature of about 25°C.

TABLE 1

| Concentration | Material | Molecular weight | Supplier |
|---|---|---|---|
| 1.4% | EMA-31 | 75,000—90,000 | Monsanto Chemical Co. St. Louis Missouri |
| 2.6% | EMA-1103 | 5,000—7,000 | Monsanto Chemical Co. St. Louis, Missouri |

The tank 2 contained as intended capsule nucleus material a solution of chromogenic compounds listed in Table 2.

TABLE 2

| Concentration | Chromogenic material |
|---|---|
| 1.7% | 3,3-bis(p-dimethylaminophenyl)-6-dimethyl-aminophthalide |
| 0.55% | 2'-anilino-3'-methyl-6'-diethylamino-fluoran |
| 0.55% | 3,3-bis(1-ethyl-2-methylindol-3-yl) phthalide |

The solvent for the chromogenic compound solution was a mixture of 65 parts of a $C_{10}$—$C_{13}$ alkylbenzene and 35 parts of a benzyl xylene. The tank 2 was maintained at a temperature of about 100°C.

The tank 3 contained a 57% aqueous solution of methylated methylol melamine (Resimene 714, Monsanto Chemical Company, St. Louis, Missouri) maintained at a temperature of about 25°C.

The conduits 4 were of stainless steel and were of 9.53 mm (3/8 inch) external diameter and 7.75 mm (0.305 inch) internal diameter. The pumps 5 were valveless variable flow rate, positive displacement metering pumps as supplied by Fluid Metering. Inc., Oyster Bay, New York and described in one or more of U.S. Patent Nos. 3,168,872; 3,257,953; and 4,008,003.

Immediately following each pump was a flow mater to monitor the flow rate of the material being pumped. The conduit 6 was of stainless steel and had an external diameter of 9.53 mm (3/8 inch).

The contents of the tanks 1, 2 and 3 were fed through the conduit 4 and into the tubular conduit 6 by means of the pumps 5. The flow rates were as indicated in Table 3.

TABLE 3

| Component | Temperature | Relative flow rate | Typical flow rate |
|---|---|---|---|
| Contents of Tank 1 | 25°C | 1.00 | 6.66 gs$^{-1}$ (400 gmin$^{-1}$) |
| Contents of Tank 2 | 100°C | 0.72 | 4.8 gs$^{-1}$ (288 gmin$^{-1}$) |
| Contents of Tank 3 | 25°C | 0.28 | 1.86 gs$^{-1}$ (112 gmin$^{-1}$) |

The components were partially mixed prior to entering the continuous emulsification mill 7 as a result of the action of the flow of the encapsulation components into conduit 6. The emulsion mill was a continuous automatic mixer comprising a mixing head consisting of a moving toothed rotor and two stators, as supplied by the E. T. Oakes Corporation, Islip, NY and as described in one or more of U.S. Patent Nos. 2,572,049; 2,600,569; 2,679,866; and 3,081,069. The positive displacement pumps 5 provide the pressure and metered flow of the encapsulation components through the mixing chamber of the emulsion mill 7. The combination of the fluid flow rate, the fluid temperature and speed of the rotor determine the degree of subdivision (i.e. the droplet size) of the liquid intended capsule nucleus material in the manufacturing vehicle. The parameters can easily be determined without undue experimentation by one skilled in the art.

The emulsion of intended capsule nucleus material in the manufacturing vehicle flowed from the emulsion mill at a temperature of 55—60°C through temperature and pressure monitors into the portion of the conduit 8 within the reactor 9 which was a water bath maintained at 70—75°C. The portion of the conduit 8 within the reactor 9 consisted of 45.72 m (150 ft.) of rubber hose. The first 15.24 m (50 ft.) of hose had an internal diameter of 19.05 mm (3/4 inch) and the remaining 30.48 m (100 ft.) of hose had an internal diameter of 15.88 mm (5/8 inch).

Table 4 lists the physical dimensions of conduit 8 from which the residence time of each portion of encapsulation components in the reactor 9 can be calculated.

TABLE 4

| Hose inside diameter | Volume per metre | Volume per foot | Length in metres (feet) | Total volume |
|---|---|---|---|---|
| 19.05 mm (3/4 inch) | 287 cm$^3$ | 87.5 cm$^3$ | 15.24 (50) | 4350 cm$^3$ |
| 15.88 mm (5/8 inch) | 198 cm$^3$ | 60.5 cm$^3$ | 30.48 (100) | 6050 cm$^3$ |
| | | | | 10400 cm$^3$ |

The total flow rate of all components from Table 3 was 13.33 grams per second (800 grams per minute). The specific gravity of the component mixture was approximately one and therefore the residence time of any given portion of encapsulation component mixture in conduit 8 of reactor 9 was 780 seconds (13 minutes).

The finished capsule dispersion emerged from the exit end 10 of conduit 8 at a temperature of about 70°C.

The finished capsule dispersion was then tested for capsule wall formation. The test used to determine capsule wall formation is the so-called CF drawdown test. The finished capsule dispersion was coated onto a reactive CF paper of which the reactive coating was a metal-modified phenolic resin as disclosed in US Patent No. 3732120. It will be appreciated that if encapsulation has not occurred, or if it is incomplete, or if the capsule walls are very weak, a colour will be formed by the reaction of the dye with the CF coating. However if wall formation has occurred, no colouration or only minor colouration will occur. The extent of colouration is determined by reflectance measurements using an opacimeter. The reflectance of the coating using capsules prepared as just described as measured by an opacimeter was 72. This indicates extremely satisfactory capsule wall formation after a residence time of only 13 minutes in the reactor.

For comparison purposes capsules were prepared by the batch process according to Example 18 of United States Patent No. 4,100,103 in which the reactants were processed at a temperature of 70°C for one hour and produced an opacimeter reflectance of 70.

Since higher reflectance numbers represent less colour and in turn better wall formation, the process of the present invention produced better capsules at a comparable temperature in a much shorter period of time.

The finished capsule dispersion was also tested by formulating and coating a CB sheet and testing this firstly against a metal-modified phenolic resin CF sheet in a so-called Typewriter Intensity Test and secondly an oven storage test.

The Typewriter Intensity (TI) Test tests the ability of the capsules to rupture and form colour when used in a pressure-sensitive copying system by providing a value which indicates a ratio of reflectances—the reflectances being of the marks produced on a CF sheet, when coupled with a CB sheet, by a typewriter striking two sheets together, versus the papers' background reflectance:

$$TI = \frac{\text{printed character reflectance} \times 100}{\text{background reflectance}}$$

A high value indicates little colour development and a low value indicates good colour development.

The oven storage test is a measure of the extent to which the capsule-coated paper loses its ability to produce transfer prints in a typewriter test after storage of the coated paper in an oven at a specified temperature for a specified time (Oven storage is intended to simulate what happens over a longer period of time at room temperature). A CB/CF couplet is imaged by typewriter and the CB sheet then placed in a 95°C oven for 18 hours and then the CB/CF couplet is re-imaged after storage. Poor capsules lose most or all of their ability to make a transfer print during such oven storage whilst good capsules withstand this storage with little or no loss in ability to give a print. In these tests the initial typewriter intensity was 56 and typewriter intensity after overnight storage of the CB sheet in an oven at 95°C was 59. These data indicate capsules having good shelf life, stability and storage properties.

Turbulent flow of a fluid in a conduit is defined by U.S. Patent Nos. 3,812,056 and 3,816,331 as occurring when a dimensionless engineering value, termed the Reynolds Number, is greater than about 2000. Reynolds Number is designated by R in the following equation:

$$R = \frac{DV}{\mu}$$

wherein

D is the diameter of the conduit;

V is the velocity of a cross-section of front of the fluid moving through the conduit;

p is the density of the flowing fluid; and

$\mu$ is the viscosity of the flowing fluid.

When the Reynolds Number is calculated for the example of the present invention just described, the following values are encountered for the first portion of conduit 8:

D=3/4 inch=1.9 cm.

V=flow/cross section

flow=800 cm$^3$ min$^{-1}$=13.3 cm$^3$ s$^{-1}$

cross-section=$\pi r^2$=3.14 (0.95)$^2$=2.83 cm$^2$

$$V = \frac{13.3}{2.83} = 4.7 \text{ cm s}^{-1}$$

$\rho$=1 gcm$^{-3}$

$\mu=100$ centipoise$=1$ poise of $1$ g $(cm-s)^{-1}$

$$R=\frac{(1.9)(4.7)(1)}{1}=8.9$$

If a Reynolds Number of 2000 or greater is required for turbulent flow, the flow in the 19.05 mm portion of conduit 8 of the apparatus of the present invention is unquestionably *not* turbulent.

An analagous calculation for the second portion of conduit 8 shows:

$D=5/8$ inch$=1.6$ cm

flow$=13.3$ cm$^3$ s$^{-1}$

Cross-section$=^2$     $=3.14$ $(0.8)^2$
                $=2.01$ cm$^2$

$$V=\frac{13.3}{2.01}=6.6 \text{ cm s}^{-1}$$

$$R=\frac{(1.6)(6.6)(1)}{1}=10.6$$

The flow in the second portion of conduit 8 of the apparatus of the preferred embodiment of the present invention is, likewise, unquestionably *not* turbulent.

Using the same type of equations it was calculated that to obtain turbulent flow in conduit 8 of the apparatus of the present invention, utilizing the same flow rate and residence time, the conduit would have to be 0.085 mm in diameter and 1825 kilometres (1130 miles) long.

### Claims

1. A process for manufacturing microcapsules which comprises emulsifying particles or droplets of a substantially water insoluble capsule nucleus material in an aqueous manufacturing vehicle containing:

(a) a mixture of a water soluble capsule wall precursor material selected from monomeric methylol melamine or etherified methylol melamine or low molecular weight polymers thereof, or any combination of these materials; and

(b) a negatively charged polymeric polyelectrolyte having a linear aliphatic hydrocarbon backbone with an average of two carboxyl groups for every four to six backbone carbons.

characterized in that the process is carried out continuously by mixing the capsule wall precursor material, the particles or droplets of capsule nucleus material and the polyelectrolyte prior to emulsification and passing the emulsion in non-turbulent flow through a tubular reactor at a single elevated temperature.

2. A process for continuously manufacturing microcapsules as claimed in claim 1 wherein the single elevated temperature is from 40°C to 95°C.

3. A process for continuously manufacturing microcapsules as claimed in claim 2 wherein the single elevated temperature is from 60°C to 95°C.

### Patentansprüche

1. Verfahren zur Herstellung von Mikrokapseln, das die Emulgierung von Teilchen oder Tröpfchen eines in Wasser im wesentlichen unlöslichen Kapselkernmaterials in einem wasserhaltigen Herstellungsvehikel umfaßt, das

(a) eine Mischung eines in Wasser löslichen Kapselwandvorläufermaterials enthält, das aus monomeren Methylolmelamin oder veretherten Methylolmelamin oder seinen niedermolekularen Polymeren oder einer Kombination dieser Materialien besteht und das

(b) einen negativ geladenen polymeren Polyelektrolyten mit einer linearen aliphatischen Kohlenwasserstoff-Hauptkette enthält, die durchschnittlich zwei Carboxylgruppen pro 4 bis 6 Kohlenstoffatome der Kohlenwasserstoff-Hauptkette enthält,

dadurch gekennzeichnet, daß das Verfahren kontinuierlich durchgeführt wird durch das Mischen des Kapselwandvorläufermaterials, der Partikel oder Tröpfchen des Kapselkernmaterials und des Polyelektrolyten vor der Emulgation und dem Durchleiten der Emulsion in einer nicht turbulenten Strömung durch einen Röhrenreaktor bei einer-einzigen erhöhten Temperatur.

2. Verfahren zur kontinuierlichen Herstellung von Mikrokapseln nach Anspruch 1, bei dem die einzige erhöhte Temperatur im Bereich von 40°C bis 95°C liegt.

3. Verfahren zur kontinuierlichen Herstellung von Mikrokapseln nach Anspruch 2, bei dem die einzige erhöhte Temperatur im Bereich von 60 bis 95°C liegt.

**Revendications**

1. Procédé de fabrication de microcapsules, conformément auquel on émulsionne des particules ou des gouttelettes d'une matière servant de noyau aux capsules, sensiblement insoluble dans l'eau, dans un véhicule de fabrication aqueux contenant:

(a) un mélange d'une matière servant de précurseur de paroi de capsule, soluble dans l'eau, choisie parmi la méthylol-mélamine monomère, la méthylol-mélamine éthérifiée, des polymères de celles-ci de faible poids moléculaire et n'importe quelle combinaison de ces substances; et
(b) un polyélectrolyte polymère, négativement chargé, possédant une ossature hydrocarbonée aliphatique linéaire, avec une moyenne de deux radicaux carboxyle pour chaque fois 4 à 6 atomes de carbone de l'ossature,

caractérisé en ce que l'on met le procédé en oeuvre de manière continue en mélangeant la matière constitutive du précurseur des parois des capsules, les particules ou gouttelettes de matière constitutive du noyau des capsules et le polyélectrolyte, préalablement à l'émulsionnement et en ce que l'on fait passer l'émulsion suivant un écoulement ou flux turbulent, à travers un réacteur tubulaire, à une température élevée unique.

2. Procédé de fabrication continue de microcapsules suivant la revendication 1, caractérisé en ce que la température élevée unique varie de 40 à 95°C.

3. Procédé de fabrication continue de microcapsules suivant la revendication 2, caractérisé en ce que la température élevée unique fluctue de 60°C à 95°C.